# FASCICULE DE BREVET EUROPEEN

(11) **EP 2 944 420 B1**
(45) Date de publication et mention de la délivrance du brevet: **09.08.2017**
(21) Numéro de dépôt: 15162571.2
(22) Date de dépôt: 07.04.2015
(51) Int. Cl.: B23Q 11/12

(54) **PROCEDE ET SYSTEME DE CONTROLE DE L'USINAGE D'UNE PIECE PAR UN APPAREIL D'USINAGE AUTOMATIQUE PORTATIF**
VERFAHREN UND SYSTEM ZUR KONTROLLE DER BEARBEITUNG EINES WERKSTÜCKS MIT EINER TRAGBAREN AUTOMATISCHEN BEARBEITUNGSVORRICHTUNG
METHOD AND SYSTEM FOR CONTROLLING THE MACHINING OF A WORKPIECE BY A PORTABLE AUTOMATIC MACHINING APPARATUS

(30) Priorité: 14.04.2014 FR 1453304
(43) Date de publication de la demande: 18.11.2015
(73) Titulaire: European Aeronautic Defence and Space Company - EADS France, 75016 Paris (FR); AIRBUS OPERATIONS (SAS), 31060 Toulouse (FR)
(72) Inventeur: Ramiere, Jean-François, 44250 SAINT BREVIN (FR); Duquesne, Julie, 44600 SAINT NAZAIRE (FR); Pinson, Bernard, 44550 MONTOIR DE BRETAGNE (FR); Buisson, Thomas, 92140 CLAMART (FR)
(74) Mandataire: Petit, Maxime

(56) Documents cités:
- US-A- 5 755 537

## Description

### DOMAINE DE L'INVENTION

L'invention est relative à un procédé de contrôle de l'usinage d'une pièce par un appareil d'usinage automatique portatif.

### ART ANTERI EUR

Un appareil d'usinage comprend généralement un outil d'usinage qui est configuré pour usiner une pièce suivant un cycle d'usinage comportant plusieurs phases telles que :
- l'approche de l'outil par rapport à la pièce à partir d'une position initiale,
- la pénétration de l'outil dans la pièce (usinage ou perçage),
- la sortie de l'outil par rapport à la pièce,
- le retrait ou recul de l'outil pour qu'il revienne à sa position initiale en faisant appel à une butée mécanique.

De manière conventionnelle, un lubrifiant est utilisé lors d'un cycle d'usinage et la lubrification de l'outil est réalisée de façon continue pendant la totalité du cycle, c'est-à-dire depuis l'approche de l'outil jusqu'à son retour en position initiale.

Ainsi, la lubrification se poursuit même après l'opération d'usinage ou perçage (lorsque l'outil est sorti de la pièce) et durant le retour de l'outil à sa position initiale.

Ceci constitue une source de pollution du milieu dans lequel s'effectue l'usinage et représente un gaspillage de lubrifiant.

De plus, un nuage de lubrifiant peut se produire, ce qui oblige les opérateurs à porter un masque de protection.

Le document US 5 755 537 décrit un appareil d'usinage de l'art antérieur qui comprend un outil d'usinage qui est configuré pour usiner une pièce suivant un cycle d'usinage comportant plusieurs phases telles que :
- l'approche de l'outil par rapport à la pièce à partir d'une position initiale,
- la pénétration de l'outil dans la pièce,
- le retrait ou recul de l'outil pour qu'il revienne à sa position initiale.

### RESUME

La présente invention vise à remédier à au moins un des inconvénients précités en proposant un procédé de contrôle de l'usinage d'une pièce par un appareil d'usinage automatique portatif, l'appareil d'usinage comprenant au moins un outil d'usinage qui est configuré pour usiner la pièce sous l'action d'un fluide sous pression alimentant l'appareil et suivant un cycle d'usinage comportant plusieurs phases et au moins un équipement de support d'usinage, ledit au moins un équipement de support d'usinage coopérant avec ledit au moins outil d'usinage lors de l'usinage de la pièce, le procédé de contrôle étant caractérisé en ce qu'il comprend les étapes suivantes :
- mesure de la pression du fluide en sortie de l'appareil,
- analyse de la pression mesurée pour détecter au moins une phase du cycle d'usinage de la pièce par ledit au moins un outil d'usinage à partir de la pression ainsi mesurée,
- commande dudit au moins un équipement de support d'usinage en fonction de ladite au moins une phase du cycle d'usinage détectée.

La mesure de la pression du fluide (ou de la variation de pression du fluide) qui est utilisé pour le fonctionnement de l'outil (gaz ou liquide) est représentative des phases du cycle d'usinage de la pièce. Ainsi, il est possible d'en déduire la phase dans laquelle est l'appareil, connaissant la pression ou variation de pression. De ce fait, la connaissance de la phase du cycle permet de gérer de manière adaptée la lubrification de l'outil et donc d'éviter les problèmes rencontrés dans l'art antérieur.

Selon d'autres caractéristiques prises isolément ou en combinaison l'une avec l'autre :
- l'étape de commande dudit au moins un équipement de support d'usinage est effectuée en envoyant un signal à un actionneur qui agit sur ledit au moins un équipement de support d'usinage ;
- le procédé comprend, préalablement à l'étape de mesure de la pression, une étape appelée cycle à vide, d'initialisation d'au moins une valeur de référence d'au moins une variable représentative d'une grandeur physique intervenant lors de l'usinage de la pièce ;
- ladite au moins une variable est choisie parmi le temps et la pression ;
- le procédé comprend, à partir de la pression mesurée au cours du temps, une étape de détermination de la dérivée première de la pression en fonction du temps ;
- le procédé comprend, à partir de la pression mesurée au cours du temps, une étape de détermination de la dérivée seconde de la pression en fonction du temps ;
- le procédé comprend une étape de comparaison de la dérivée seconde de la pression avec une valeur seuil prédéterminée et, en fonction du résultat de la comparaison, une étape de détection de début d'usinage qui est caractérisée par l'entrée de l'outil d'usinage dans la pièce ;
- le procédé comprend une étape de comparaison de la dérivée première de la pression avec une valeur seuil prédéterminée et, en fonction du résultat de la comparaison, une étape de détection de fin d'usinage qui est caractérisée par la sortie de l'outil d'usinage de la pièce ;
- le procédé comprend une étape de comparaison d'une durée d'usinage avec une valeur seuil (tmax) mesurée lors de l'étape de cycle à vide et, en fonction du résultat de la comparaison, une étape de détection de fin d'usinage qui est caractérisée par la sortie de l'outil d'usinage de la pièce ;
- l'étape de détection de fin d'usinage est suivie de l'étape de commande dudit au moins un équipement support d'usinage.

L'invention a également pour objet un système de contrôle de l'usinage d'une pièce, caractérisé en ce qu'il comprend :
- un appareil d'usinage automatique (portatif ou non) comprenant, au moins un outil d'usinage configuré pour usiner la pièce suivant un cycle d'usinage comportant plusieurs phases, au moins un premier équipement de support d'usinage qui comprend une broche supportant ledit au moins un outil d'usinage, une unité d'entrainement en mouvement de la broche, une alimentation en fluide sous pression de l'appareil et une sortie de fluide dudit appareil, l'unité d'entrainement fonctionnant à partir de l'alimentation en fluide sous pression de l'appareil,
- des moyens de mesure de la pression du fluide en sortie de l'appareil,
- des moyens d'analyse de la pression mesurée par lesdits moyens de mesure pour détecter au moins une phase du cycle d'usinage de la pièce par ledit au moins un outil d'usinage à partir de la pression ainsi mesurée,
- des moyens de commande dudit au moins un équipement de support d'usinage en fonction de ladite au moins une phase du cycle d'usinage détectée.

Selon d'autres caractéristiques possibles prises isolément ou en combinaison l'une avec l'autre :
- ledit au moins un équipement de support d'usinage comprend un réservoir de lubrification ;
- les moyens de commande sont intégrés dans une machine outil multiaxiale mobile.

### BREVE DESCRIPTION DES DESSINS

D'autres caractéristiques apparaitront au cours de la description qui va suivre donnée uniquement à titre d'exemple non limitatif et faite en référence aux dessins annexés, sur lesquels :
- la figure la est une vue schématique d'un système de contrôle de l'usinage d'une pièce selon un mode de réalisation de l'invention;
- la figure 1b illustre de façon détaillée l'appareil d'usinage du système de la figure 1a ;
- les figures 2a et 2b représentent des moyens de commande du recul de l'outil de l'appareil d'usinage 12 ;
- les figures 3a-c représentent un algorithme de fonctionnement d'un procédé de contrôle de l'usinage d'une pièce selon un mode de réalisation de l'invention ;
- la figure 4 représente sur un diagramme les courbes des variations au cours du temps de la pression mesurée, de la dérivée première et de la dérivée seconde de cette pression;
- les figures 5 et 6 illustrent le perçage dans un assemblage de deux pièces (fig.5) et dans une pièce avec des épaisseurs différentes (fig.6).

### DESCRIPTION DETAILLEE

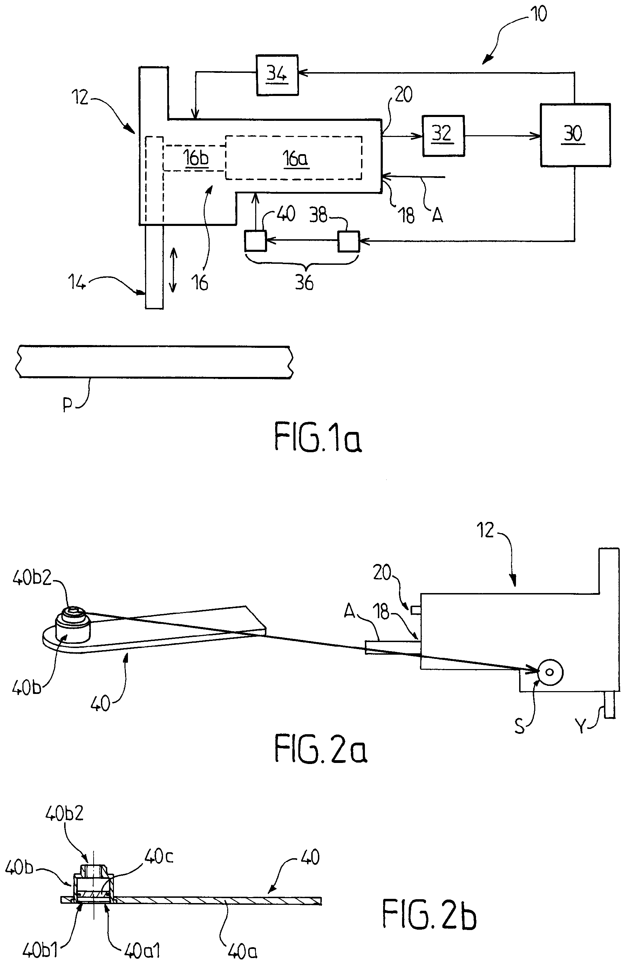

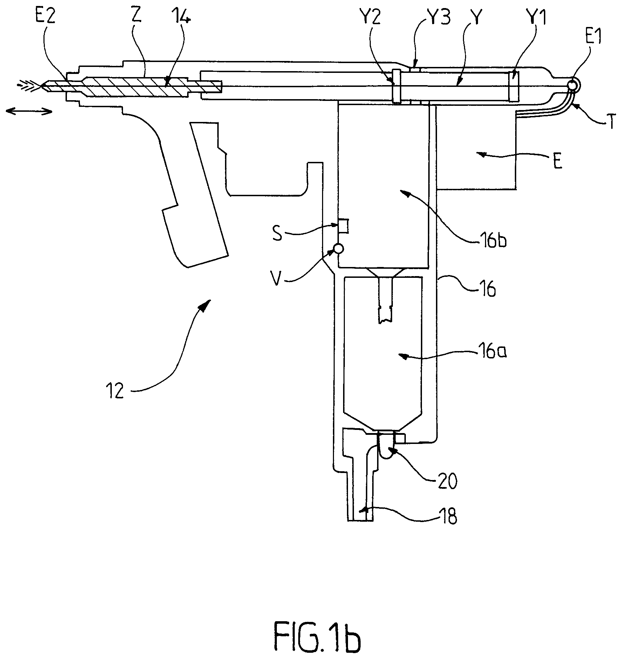

Comme représenté schématiquement à la figure 1 et désigné par la référence générale notée 10, un système de contrôle d'usinage d'une pièce comprend un appareil d'usinage automatique portatif 12 de pièces qui est, par exemple, un appareil utilisé pour le perçage/l'alésage de pièces.

Comme illustré sur la figure 1b, l'appareil d'usinage automatique portatif 12, ici décrit à titre d'exemple de façon non limitative, comprend un canon creux Z qui loge un outil d'usinage 14 assemblé par une de ses extrémités sur un premier équipement de support d'usinage, appelé broche Y qui est, par exemple, un axe, partiellement ou totalement fileté.

On entend par équipement de support d'usinage un équipement (intégré ou non mécaniquement à l'appareil) qui coopère fonctionnellement avec l'outil d'usinage lors de l'usinage d'une pièce par l'outil. L'outil est par exemple un outil coupant ou d'un outil de fraisurage. La broche Y supporte une première butée Y1, appelée butée avant, et une deuxième butée Y2, appelée butée arrière. Une troisième butée Y3, appelée butée fixe, est présente sur une paroi interne du canon creux Z, entre la butée arrière et la butée avant.

L'appareil d'usinage automatique portatif 12 comprend également une unité d'entrainement 16 destinée à entrainer en mouvement la broche Y et donc l'outil d'usinage 14. L'unité d'entrainement 16 comprend un moteur pneumatique 16a, par exemple une turbine alimentée en fluide sous pression et un ensemble mécanique 16b, de type pignonnerie (ou ensemble de trains épicycloïdaux), qui relie la turbine 16a à la broche Y assemblée à l'outil d'usinage 14.

L'appareil d'usinage automatique portatif 12 comprend, de plus, une entrée 18 pour recevoir une alimentation A en fluide sous pression. Le fluide sous pression est nécessaire au fonctionnement de l'unité d'entrainement 16. L'appareil 12 comprend une sortie 20 du fluide qui a été utilisé par l'unité d'entrainement 16. Le fluide est par exemple de l'air sous pression.

L'appareil d'usinage automatique portatif 12 comprend également un dispositif de pilotage S, par exemple un bouton poussoir, agissant sur l'ensemble mécanique 16b afin de déplacer la broche Y jusqu'à ce que la butée arrière Y2 soit en contact avec la butée fixe Y3. Ainsi, lorsqu'une pression est exercée sur le bouton poussoir S, l'outil d'usinage 14 est ramené en position initiale.

L'appareil d'usinage automatique portatif 12 comprend un deuxième équipement de support d'usinage, à savoir un réservoir de lubrification, référencé E sur la figure 1b, qui peut être embarqué, comme illustré, ou qui peut être déporté. Un piston interne (non représenté) et un tuyau T de raccordement entre le réservoir de lubrifiant E et une première extrémité E1 du canon creux Z permettent d'amener le lubrifiant du réservoir de lubrification E jusqu'à l'outil d'usinage 14. Le lubrifiant circule dans la broche Y et dans l'outil d'usinage 14 et est évacué par une extrémité de l'outil d'usinage 14 qui est opposée à celle assemblée sur la broche Y. Une pression continue appliquée sur un mécanisme de verrouillage V, permet de couper la lubrification de l'outil d'usinage 14.

La lubrification est également automatiquement stoppée lorsque le dispositif de pilotage S est activé.

Sous l'action du fluide sous pression, la turbine 16a se met en rotation et l'ensemble mécanique 16b transforme le mouvement de rotation de l'arbre de sortie (non représenté) de la turbine 16a en un mouvement de translation et de rotation de la broche Y et donc de l'outil d'usinage 14. Le mouvement comprend le déplacement axial (translation) de l'outil d'usinage 14 (comme indiqué par la double flèche sur la figure 1b) et la rotation de l'outil sur lui-même pour l'usinage de la pièce.

Avec le déplacement de la broche Y et de l'outil d'usinage 14, les butées avant Y1 et arrière Y2 se déplacent dans le même sens que l'outil d'usinage 14. Dans un sens, appelé avance, l'outil d'usinage 14 sort du canon creux Z par une deuxième extrémité E2 et le déplacement est stoppé lorsque la butée avant Y1 est en contact avec la butée fixe Y3 et dans l'autre sens, appelé recul, l'outil d'usinage 14 rentre dans le canon creux Z par la deuxième extrémité E2 et le déplacement est stoppé lorsque la butée arrière Y2 est en contact avec la butée fixe Y3.

Ainsi, l'outil d'usinage 14 est apte à se déplacer suivant une direction axiale, dans les deux sens indiqués par la double flèche sur la figure 1b, entre une position initiale, correspondant à la position de l'outil lorsque la butée arrière Y2 est en contact avec la butée fixe Y3, et une position finale, correspondant à la position de l'outil d'usinage 14 lorsque la butée avant Y1 est en contact avec la butée fixe Y3. En position initiale, toute la longueur de l'outil d'usinage 14 est dans le canon creux Z.

Ces différents éléments permettent de faire avancer ou reculer l'outil d'usinage 14 par rapport à une pièce P positionnée sur la course de déplacement de l'outil d'usinage 14 comme illustré sur la figure 1a. Ainsi, la pièce peut-être usinée par l'outil d'usinage 14 qui est assemblé sur la broche Y (outil coupant pour perçage ou alésage, outil de fraisurage pour le fraisurage, outil coupant combiné pour perçage/alésage/fraisurage en une passe).

L'usinage de la pièce P, par un tel appareil d'usinage automatique portatif 12, est effectué suivant un cycle d'usinage qui comporte plusieurs phases, à savoir :
- une phase d'approche et de mise en rotation simultanée de l'outil 14 par rapport à la pièce P à partir d'une position initiale,
- une phase de pénétration de l'outil 14 dans la pièce P par une face dite d'entrée (phase de perçage ou plus généralement d'usinage),
- une phase de sortie de l'outil 14 par rapport à la pièce P durant laquelle l'outil débouche hors de la pièce par une face dite de sortie opposée à la face d'entrée,
- une phase de retrait ou de recul de l'outil (appelé aussi « retour de broche ») durant laquelle l'outil 14 revient à sa position initiale.

Selon l'invention, le système de contrôle 10 illustré à la figure 1a comprend une unité de traitement de données 30 (ex : micro-contrôleur) qui est configurée pour traiter des données d'entrée et, à partir des données ainsi traitées, générer des ordres de commandes (par exemple sous la forme de signaux électriques) vers des moyens d'actionnement des équipements de support d'usinage. L'unité de traitement de données 30 comprend également une ou plusieurs zones mémoire pour le stockage de données d'entrée et de données résultant du traitement.

Le système de contrôle 10 comprend également des moyens 32 de mesure (la mesure est généralement effectuée en continu) de la pression du fluide à la sortie 20 de l'appareil 12, ces moyens étant configurés pour délivrer en sortie, à l'unité de traitement 30, un signal de pression ou un ensemble de valeurs numériques de pression.

Avantageusement, le système de contrôle 10 comprend un écran d'affichage (non illustré) qui informe l'utilisateur sur les cycles en cours (cycle à vide, cycle de perçage...).

L'unité de traitement de données 30 est configurée notamment pour traiter les données fournies par les moyens de mesure 32 (signal de pression ou ensemble de valeurs numériques de pression) et détecter, à partir de ces données ainsi traitées, une ou plusieurs phases du cycle d'usinage.

Le système 10 comprend plusieurs moyens de commande/contrôle qui, sur commande de l'unité de traitement 30, commandent/contrôlent le fonctionnement d'un ou des équipements de support d'usinage de l'appareil 12. Ce contrôle est asservi à la mesure de la pression et à la phase du cycle d'usinage détectée.

De façon générale, ces moyens de commande/contrôle comprennent :
- une liaison filaire (ex : fil électrique) entre l'unité de traitement 30 et un actionneur tel qu'une électrovanne, qui est commandé par un signal provenant de l'unité 30,
- un mécanisme d'actionnement d'un équipement de support d'usinage qui est activé ou mis en oeuvre par l'actionneur ainsi commandé.

Plus particulièrement, le système 10 de la figure 1a comprend :
- des moyens 34 de commande/contrôle du fonctionnement du réservoir de lubrification E et
- des moyens 36 de commande/contrôle du fonctionnement de la broche Y.

Les moyens 34 et 36 sont de même nature et seuls les moyens 36 seront détaillés ci-après.

Les moyens 36 sont configurés pour commander le retour de la broche Y supportant l'outil 14 ou l'arrêt de la lubrification lorsque la sortie de la pièce par l'outil d'usinage a été détectée par l'unité 30.

A titre d'exemple, les moyens 36 comprennent une électrovanne 38 reliée par un fil électrique à l'unité 30 et un actionneur 40 relié à l'électrovanne. L'unité 30 envoie à l'électrovanne 38, via le fil électrique, un signal de commande de l'ouverture ou de la fermeture de ladite électrovanne, autorisant ainsi ou non le passage d'un fluide tel que de l'air (par exemple prélevé sur le circuit d'air interne à l'appareil 12) pour son injection dans l'actionneur. L'actionneur 40 agit ensuite sur le mécanisme d'actionnement de la broche Y, à savoir le dispositif de pilotage S présenté plus haut.

Parallèlement, l'actionneur des moyens 34 est apte à agir sur le mécanisme d'actionnement du réservoir de lubrification, à savoir le piston interne du mécanisme de verrouillage V présenté plus haut.

Les figures 2a et 2b illustrent un exemple de réalisation des moyens de commande 36 du recul de la broche Y et donc du retour de l'outil d'usinage 14 qui agissent de manière indirecte sur le fonctionnement de l'unité d'entrainement 16.

Comme représenté sur la figure 2a, l'appareil 12 comporte le mécanisme d'actionnement ou de pilotage S (ex : bouton poussoir), dont l'actionnement par enfoncement commande le recul de l'outil 14 (retour de broche; seule la broche Y est représentée sur la figure 2a). Dans le présent exemple, la commande est effectuée par l'intermédiaire de l'actionneur 40 de la figure la qui va simuler mécaniquement l'action d'appui réalisée manuellement par un utilisateur. La commande est ainsi réalisée de manière automatique en fonction des ordres de commande envoyés par l'unité de traitement 30.

Cet actionneur prend par exemple la forme représentée sur les figures 2a et 2b. L'actionneur comprend une embase 40a percée d'un orifice traversant 40a1, sur laquelle est monté un corps de vérin 40b à l'intérieur duquel un élément formant piston 40c est susceptible de coulisser de manière étanche via un joint radial. Le corps 40b est ouvert à ses deux extrémités opposées pour permettre, du côté de l'extrémité 40b1 qui coïncide avec l'orifice traversant 40a1, l'alimentation en fluide (air comprimé provenant du circuit de l'appareil) autorisée par l'électrovanne 38 sur envoi d'un signal de commande d'arrêt de l'unité 30 (en vue du remplissage du corps et du déplacement du piston 40c) et, du côté de l'extrémité opposée 40b2, le passage de l'air. La pression de l'air expulsé par l'extrémité 40b est suffisante pour appuyer sur le dispositif de pilotage S. L'embase est de forme allongée pour permettre la mise en place d'un élément de fixation sur l'extérieur du corps de l'appareil 12.

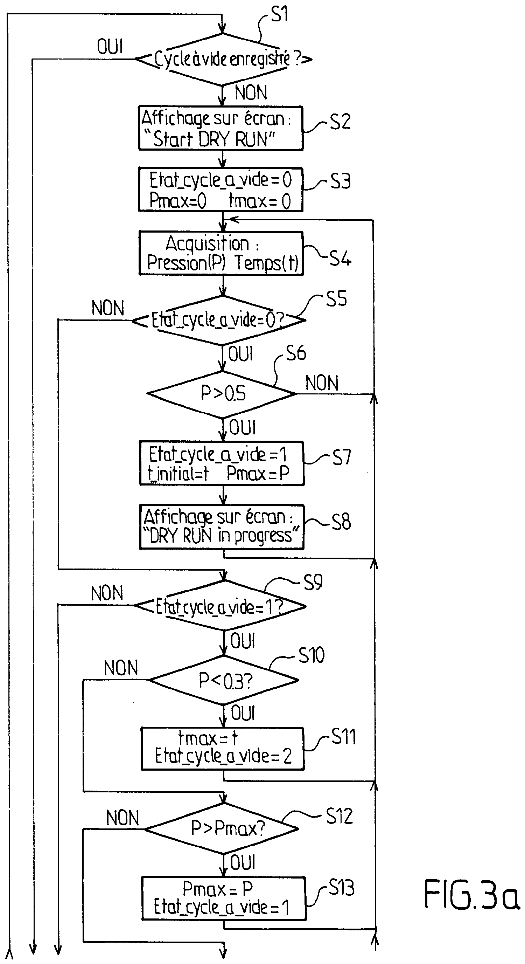

Les figures 3a-c représentent un algorithme de fonctionnement du système de contrôle 10 sur lequel s'appuie un procédé de contrôle de l'usinage d'une pièce par l'appareil 12 selon un mode de réalisation de l'invention.

L'algorithme est stocké dans l'unité 30.

Plusieurs variables d'entrée sont utilisées dans cet algorithme, à savoir :
- la pression P du fluide (air comprimé) qui est une variable continue mesurée et stockée en permanence,
- le temps t qui est une variable continue mesurée et stockée en permanence,
- l'état du cycle en cours qui est une variable discrète,
- l'état d'un équipement de support d'usinage qui, dans l'exemple ici décrit, est le réservoir de lubrification et la variable d'état correspondante est dénommée EV_lubrification.

Plus particulièrement, la variable d'état du cycle en cours peut correspondre à :
- la variable Etat_cycle_a_vide pendant la réalisation du cycle à vide et qui prend les valeurs suivantes :
   - 0 lorsqu'il n'y a pas de cycle à vide en cours
   - 1 lorsque le cycle à vide démarre
   - 2 lorsque le cycle à vide est fini
- la variable état-perçage pendant la réalisation d'un cycle d'usinage/perçage et qui prend les valeurs suivantes :
   - 0 lorsqu'il n'y a pas de cycle de perçage en cours
   - 1 lorsque le cycle de perçage démarre
   - 2 lorsque le cycle de perçage est en cours
   - 3 lorsque le cycle de perçage est fini et la lubrification n'est plus nécessaire.

Dans l'exemple de réalisation décrit deux types de calcul sont effectués sur les mesures de pression réalisées :
- une moyenne sur 16 échantillons afin de lisser les courbes et de s'affranchir des valeurs aberrantes,
- une moyenne sur quatre échantillons afin de réduire l'effet de retard dû au calcul effectué sur la base de 16 échantillons et d'obtenir une valeur instantanée de la variable.

L'algorithme débute (figure 3a) par une première étape de test S1 afin de savoir si le cycle à vide a déjà eu lieu.

Dans la négative, les étapes suivantes sont effectuées :
- S2 : affichage sur l'écran associé à l'unité 30 d'un message indiquant qu'un cycle à vide va être effectué,
- S3 : initialisation des variables Etat_cycle_a_vide, Pmax et tmax à 0 ;
- S4 : acquisition des mesures de pression P et du temps t par exemple à intervalle régulier, notamment toutes les 10 ms ;
- S5 : test afin de savoir si le cycle à vide n'a pas commencé.

Si la variable Etat_cycle_a_vide prend la valeur 0 alors le cycle à vide démarre et l'étape S5 est suivie de l'étape S6 de contrôle de la valeur de la pression mesurée P par rapport à un premier seuil prédéterminé (ex : 0,5 bars).

Si P ≤ 0,5 bars l'algorithme revient à l'étape S4 déjà décrite car la pression est insuffisante.

Si, au contraire, P ≥ 0,5 bars la pression est suffisante pour que le cycle à vide démarre et les étapes suivantes sont effectuées :
- S7 : la valeur de la variable d'état Etat_cycle_a_vide passe à 1, la valeur de l'instant de démarrage du cycle tinitial est enregistrée ainsi que la valeur de la pression en cours Pmax ;
- S8 : affichage sur l'écran d'un message indiquant que le cycle à vide est en cours.

L'algorithme se poursuit ensuite par l'étape S4 déjà décrite.

De retour à l'étape de contrôle S5 décrite précédemment, lorsque la variable Etat_cycle_a_vide est différente de 0, un autre test est effectué à l'étape suivante S9 afin de déterminer si cette variable est égale à 1 (cycle à vide en cours).

Dans l'affirmative, l'étape suivante S10 effectue un contrôle de la valeur de la pression mesurée par rapport à un deuxième seuil prédéterminé (ex : 0,3 bars).

Si P < 0,3 bars cela signifie que le perçage est terminé.

L'étape suivante S11 enregistre l'instant tmax de fin de cycle à vide, ce qui permet de déterminer (et ensuite d'enregistrer) la durée du cycle à vide compte tenu de l'instant de démarrage du cycle enregistré à l'étape S7.

La variable Etat_cycle_a_vide passe alors à 2 (cycle fini) et l'étape S11 est suivie de l'étape S4 déjà décrite.

On notera qu'un seul cycle à vide est effectué quel que soit le nombre d'opérations de perçage de trous.

Si, au contraire, P≥ 0,3 bars, l'étape S9 est suivie de l'étape S12 au cours de laquelle on vérifie si la pression est supérieure à Pmax (pression enregistrée à l'étape S7 au cours du cycle à vide).

Dans l'affirmative, on enregistre la nouvelle valeur de la pression mesurée qui correspond à la nouvelle valeur de Pmax. Avantageusement, la variable Etat_cycle_a_vide est mise à 1 (cycle fini) au cours de l'étape S13 afin de sécuriser son état.

L'étape S4 déjà décrite est alors effectuée de nouveau.

On notera que plusieurs groupes d'alimentation en fluide (air comprimé) peuvent être utilisés et le nombre de groupes branchés sur le circuit d'alimentation varie. La mise à jour de la valeur Pmax permet de s'affranchir de ces variations.

De retour à l'étape S12, si P ≤ Pmax, l'étape suivante S14 met la valeur de la variable Etat_cycle_a_vide à 2 (cycle fini) et l'étape S4 déjà décrite est de nouveau effectuée.

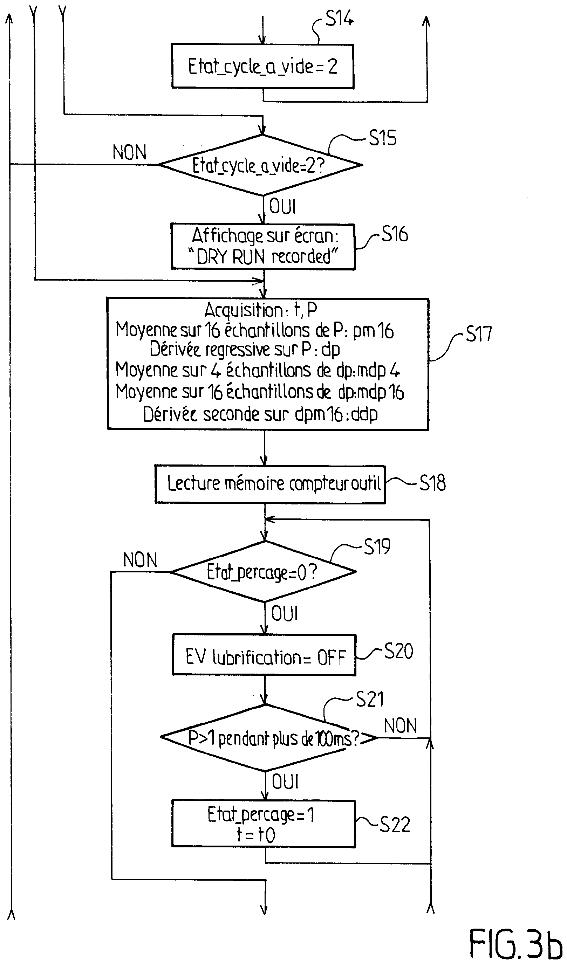

De retour à l'étape S9, lorsque la variable Etat-cycle-a-vide n'est pas égale à 1, cette étape est suivie de l'étape S15 (figure 3b) de contrôle de la valeur de cette variable par rapport à la valeur 2 (cycle à vide fini).

Si la valeur n'est pas égale à 2, le cycle à vide n'est pas fini et l'algorithme retourne à l'étape S1.

Si, au contraire, la valeur est égale à 2 (cycle à vide fini), l'étape suivante S16 affiche sur l'écran un message indiquant que le cycle de perçage va débuter.

L'étape suivante S17 constitue la première étape du cycle de perçage et effectue l'acquisition des valeurs de la pression P et du temps t, par exemple à intervalle régulier, notamment toutes les 10 ms.

Au cours de cette étape on calcule :
- la moyenne de 16 mesures de pression qui est notée pm16,
- les dérivées première, dp, et seconde, ddp, de la pression,
- la moyenne sur 4 échantillons de la dérivée première, notée mdp4,
- la moyenne sur 16 échantillons de la dérivée première, notée mdp16.

Le calcul de la dérivée seconde de la pression permet d'installer un outil d'usinage 14, comprenant un foret multi-étagés, et de s'affranchir des variations de pression correspondant aux entrées dans la matière et sorties de la matière des différents étages du foret.

On notera que lorsque le test prévu à l'étape S1 révèle qu'un cycle à vide est déjà enregistré, cette étape est directement suivie de l'étape S17.

La lecture du nombre de trous réalisés (un cycle de perçage correspond au perçage d'un trou) par l'appareil est effectuée à partir de la mémoire du compteur de l'appareil à l'étape suivante S18.

Les étapes qui vont suivre décrivent une boucle de l'algorithme qui a pour but de vérifier si les opérations de perçage ont débuté.

L'étape S19 vérifie si le perçage a débuté ou non.

Si la variable Etat_perçage est à 0 (pas de perçage en cours), l'étape est suivie de l'étape S20 d'initialisation de la variable EV_lubrification à la valeur OFF (pas de lubrification).

L'étape suivante S21 effectue un contrôle de la pression P acquise pendant une durée prédéterminée par souci de sécurité.

Si P ≤ 1 bar au delà d'une durée prédéterminée, par exemple de 100 ms, alors l'algorithme revient à l'étape S19 déjà décrite car la pression est insuffisante.

Si, au contraire, P > 1 bar pendant plus de 100 ms, la pression est considérée comme suffisante pour pouvoir enclencher la lubrification et la variable Etat_perçage passe à 1 à l'étape S22 (confirmation du début du cycle de perçage correspondant au déplacement de la broche Y par l'utilisateur). La valeur actuelle du temps est stockée dans la mémoire 30 dans une variable t0.

Cette étape est ensuite suivie de l'étape S19 déjà décrite.

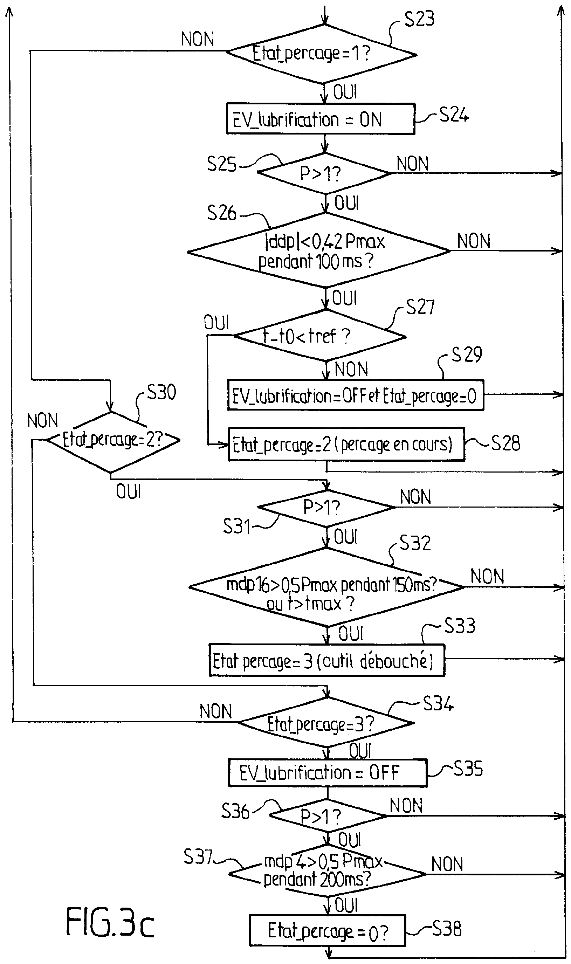

Lorsque le test pratiqué à l'étape S19 fait apparaître que la variable Etat_perçage n'est pas égale à 0, l'étape suivante S23 (figure 3c) effectue un autre test sur la valeur de cette variable.

Si Etat_perçage = 1, l'étape suivante S24 effectue une mise à jour de la variable EV_lubrification à la valeur ON (lubrification mise en oeuvre ou enclenchée) et les différents équipements de support d'usinage sont automatiquement mis en marche. Ainsi, lorsque l'outil entre dans la pièce à percer, la lubrification est déjà initiée, ce qui évite tout risque d'entrer dans la matière avant que la lubrification ne débute.

Au cours de l'étape S25 on contrôle la valeur de la pression mesurée P afin de s'assurer qu'elle est supérieure à un seuil prédéterminé fixé par exemple à 1 bar (sécurité).

Si ce n'est pas le cas, on revient à l'étape S19 déjà décrite car la pression insuffisante ne permet pas d'activer la lubrification.

Sinon, on passe à l'étape S26 qui effectue un test sur la valeur de la dérivée seconde de la pression.

Plus particulièrement, on détermine si la valeur ddp est inférieure, pendant une durée prédéterminée, par exemple de 100 ms, à un seuil prédéterminé qui est par exemple un pourcentage de la pression Pmax enregistrée lors du cycle à vide.

Le seuil est par exemple égal à 0,42 Pmax.

La valeur de ce seuil est déterminée lors d'une phase préalable de calibration sur une pièce de référence formée d'un empilement connu et correspond à la variation de pression lors de l'entrée de l'outil dans la matière, et donc au début du perçage.

Ce test permet ainsi de détecter la variation de pression correspondant à la phase de début de perçage au cours du cycle d'usinage/perçage. Il convient de noter que la dérivée première permet d'identifier les variations de pression correspondant à une entrée et une sortie de l'outil. La dérivée première suffit pour un outil simple n'ayant qu'un seul étage de foret mais n'est pas suffisante pour un outil présentant plusieurs étages de foret. La dérivée seconde de la pression est alors utilisée pour un tel outil.

On notera que le chiffre de 42% correspond aux métaux usinés qui sont généralement en aluminium.

Au cours de l'étape suivante S27, la différence entre la valeur actuelle t du temps et la valeur t0 stockée à l'étape S22 est calculée et testée. Elle est comparée à une valeur de temps tref, correspondant au déplacement axial de l'outil 14 entre sa position initiale et l'entrée dans la matière. Cette valeur de temps tref est déterminée lors de la phase de calibration précédemment décrite.

Si la différence (t-t0) est inférieure à tref, on passe à l'étape S28. Si la différence (t-t0) est supérieure à tref, cela signifie que l'outil 14 n'est pas encore entré dans la matière et qu'il est cassé. On passe alors à l'étape S29, dans laquelle la variable Etat_lubrification est mise à la valeur OFF (lubrification de l'outil désactivée) et la variable d'état Etat_perçage est mise à 0. En pratique, l'unité 30 de la figure 1 envoie à l'électrovanne des moyens 34 de la figure la un signal d'arrêt.

Au cours de l'étape S28 la variable d'état Etat_perçage est mise à 2 (perçage en cours) et, de façon optionnelle, on incrémente et on enregistre dans la mémoire du compteur le nombre de trous percés par l'appareil.

L'étape S28 est suivie de l'étape S19 déjà décrite.

De retour à l'étape S23, lorsque la variable Etat_perçage n'est pas égale à 1, un autre test est effectué (étape S30) par rapport à la valeur 2.

Si Etat_perçage = 2 (perçage en cours), l'étape suivante S31 effectue un contrôle de la pression P acquise afin de s'assurer qu'elle est supérieure à un seuil prédéterminé fixé par exemple à 1 bar (sécurité).

Si ce n'est pas le cas, on revient à l'étape S19 déjà décrite car la pression insuffisante ne permet pas d'activer la lubrification.

Sinon, on passe à l'étape S32 qui effectue un test sur la valeur mdp16 (moyenne sur les valeurs de la dérivée première).

Plus particulièrement, on détermine si la valeur mdp16 est supérieure, pendant un temps prédéfini par exemple de 150 ms, à un seuil prédéterminé qui est par exemple un pourcentage de la pression Pmax enregistrée lors du cycle à vide.

Le seuil est par exemple égal à 0,5 Pmax qui correspond aux métaux usinés généralement en aluminium.

La valeur de ce seuil est déterminée lors d'une phase préalable de calibration et correspond à la variation de pression lors de la sortie de l'outil de la matière, et donc en fin de perçage.

Le temps prédéfini est également déterminé lors d'une phase de calibration préalable et permet de s'affranchir des valeurs de mdp16 aberrantes (anormales).

Ce test permet ainsi de détecter la phase de fin de perçage au cours du cycle d'usinage/perçage (détection de sortie intégrale de l'outil).

On notera que lorsque la condition sur la valeur de mdp16 n'est pas satisfaite on effectue, au cours de l'étape S32, une vérification supplémentaire sur le temps en le comparant à la durée tmax du cycle à vide.

Ainsi, lorsque le test de l'étape S32 montre que :
- mdp16 > 0,5 Pmax pendant 150 ms,
- ou que t > tmax,
alors l'étape suivante S33 effectue une mise à jour de la variable Etat_perçage à la valeur 3 (perçage fini, l'outil est sorti de la matière et la lubrification n'est donc plus nécessaire) et l'on passe de nouveau à l'étape S19.

De retour à l'étape S30, lorsque la variable d'état Etat_perçage n'est pas égale à 2, un autre test est effectué à l'étape S34.

Si la variable Etat_perçage est différente de 3, l'étape S34 est suivie de l'étape S1 déjà décrite.

Si la variable est égale à 3, cela signifie que la lubrification n'est plus nécessaire et l'étape S35 met à jour la variable Etat_lubrification à la valeur OFF (lubrification de l'outil désactivée). En pratique, l'unité 30 de la figure 1 envoie à l'électrovanne des moyens 34 de la figure la un signal d'arrêt.

Au cours de l'étape S36 on contrôle la valeur de la pression mesurée P par rapport à un seuil prédéterminé par exemple égal à 1 bar (sécurité).

Si la pression est insuffisante l'étape est suivie de l'étape S19 déjà décrite.

Si au contraire, P > 1 bar, l'étape suivante S37 effectue un test sur la valeur mdp4 (moyenne instantanée) en adoptant la même logique que celle du test de l'étape S32 (à l'exception de la comparaison avec tmax).

Plus particulièrement, on vérifie si mdp4 est supérieure, pendant un temps prédéfini (ex : 200 ms), à un pourcentage de la pression Pmax, par exemple fixé à 50%.

Dans l'affirmative, l'étape S37 est suivie de l'étape S38 de mise à jour à 0 de la variable Etat_perçage et la broche (équipement de support d'usinage) est activée par un signal d'arrêt envoyé à l'électrovanne correspondante afin de ramener l'outil 14 à sa position initiale (commande de recul de l'outil).

L'étape S38 est suivie de l'étape S19 déjà décrite.

Un nouveau perçage peut alors être réalisé.

On notera que la détection d'un changement de matériau (par exemple dans un empilage aluminium/composite), et donc l'arrêt de la lubrification de l'outil, est effectuée dans la boucle de vérification d'un perçage terminé.

Lors de la phase de calibration préalable au cycle d'usinage/perçage, on relève la variation de pression qui intervient lorsque l'outil pénètre dans le matériau et on ajuste le seuil de comparaison de mdp4 en conséquence.

On notera de façon générale que la pression d'alimentation en fluide de l'appareil subit des variations significatives lors de l'entrée de l'outil dans la matière, lors d'un changement de matériau lors de l'usinage et à la sortie de l'outil de la matière.

Ces variations de pression sont obtenues à partir de la mesure de la pression et du calcul de sa dérivée première et de sa dérivée seconde et permettent ainsi, par comparaison avec des seuils prédéterminés, de détecter différents événements tels qu'une phase du cycle d'usinage (début et fin d'usinage), un changement de matériau...

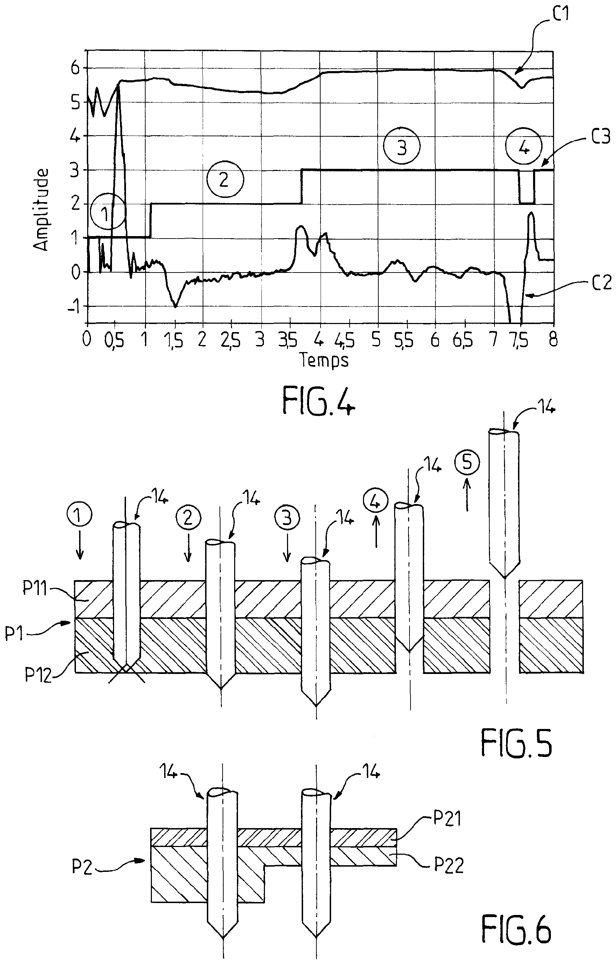

La figure 4 représente sur un même diagramme les variations de la pression mesurée (courbe C1), les variations de la dérivée première de la pression (courbe C2) et les variations de la dérivée seconde de la pression (courbe C3).

La courbe C3 de la dérivée seconde fait apparaître des paliers notés 1 à 4 et qui correspondent à différentes phases du cycle d'usinage effectué par l'appareil une fois que son démarrage a été effectué. Lorsque le démarrage de l'appareil est effectué l'outil d'usinage 14 n'est pas encore lubrifié.

Le palier 1 correspond à la mise en rotation de l'outil et à l'approche de celui-ci de la face d'entrée de la pièce à usiner.

Le palier 2 correspond à la phase d'usinage de la matière constitutive de la pièce (perçage) à proprement parler. Au cours de cette phase l'outil est entraîné en rotation et avance dans la matière en descendant (fig.1a). La commande de la lubrification de l'outil est mise en oeuvre lorsque la phase d'usinage débute (outil pénétrant la matière). Comme mentionné supra, la lubrification est commandée grâce au contrôle effectué sur la pression d'air comprimé alimentant l'appareil.

Le palier 3 correspond à la phase au cours de laquelle l'outil sort de la pièce par la face de sortie. Le passage de la phase 2 à la phase 3 est détecté par l'augmentation de valeur de la dérivée seconde de la pression (ddp). La détection de ce changement de phase déclenche l'arrêt de la lubrification.

Le palier 4 correspond à une phase optionnelle de fraisurage au cours de laquelle la pièce est fraisurée qui est suivie par le retour de broche « automatique » (quand la butée avant Y1 atteint la butée fixe Y3), afin de ramener l'outil 14 à sa position initiale.

La figure 5 illustre le perçage d'un assemblage P1 de pièces P11 et P12 par l'outil 14 des figures 1a-b. Cinq vues disposées côte à côte, numérotées 1 à 5, représentent différentes positions successives de l'outil au cours du cycle d'usinage/perçage. Le contrôle du perçage par le système de contrôle 10 de la figure 1 permet, comme décrit ci-dessus, de détecter la sortie de l'outil de la matière par la face de sortie de l'assemblage P1. La détection du débouché de l'outil commande l'arrêt de la lubrification via les moyens 34 de la figure la lorsque l'outil est dans la seconde position (deuxième vue de la figure 5).

Par ailleurs, la détection de la sortie de l'outil commande également le recul/retrait de l'outil (retour de broche) via les moyens 36 des figures 1a-b et 2a-b, comme illustré par les deux dernières positions sur la figure 5.

On notera qu'un changement de matière entre les deux pièces P11 et P12 est détectable par le procédé décrit ci-dessus.

La figure 6 illustre le perçage par l'outil 14 des figures 1a-b d'un assemblage P2 de pièces P21 et P22 possédant une différence d'épaisseurs. Le contrôle du perçage par le système de contrôle 10 de la figure la permet, comme décrit ci-dessus, de détecter la sortie de l'outil de la matière par la face de sortie de la pièce P2 et de commander le retour de la broche et l'arrêt de la lubrification. Ainsi, la détection de sortie de l'outil permet d'adapter la lubrification aux différences d'épaisseurs de la pièce avec le même outil de perçage.

Auparavant, la course de perçage de l'outil était réglée pour la plus forte épaisseur de la pièce même si l'outil était utilisé pour réaliser les deux perçages. Le temps de lubrification était donc plus long que prévu pour le perçage dans la partie de la pièce d'épaisseur réduite car il était calé sur le perçage dans la partie de la pièce de plus grande épaisseur. Grâce au procédé décrit ci-dessus, la détection de la sortie de l'outil commande l'arrêt de la lubrification via l'unité 30 et les moyens 34 de la figure la.

Par ailleurs, la détection de la sortie de l'outil commande le recul/retrait de l'outil 14, sans avoir à attendre la butée mécanique de fin de course. Ceci est particulièrement avantageux pour le perçage d'un alésage dans la partie de la pièce d'épaisseur réduite.

On notera qu'auparavant il fallait changer d'outil de perçage pour réaliser le perçage de deux parties d'épaisseurs différentes d'une même pièce.

Grâce au procédé le même outil est utilisé dans la mesure où l'épaisseur est le seul paramètre qui varie entre les deux alésages.

Bien que le procédé d'usinage et le système 10 d'usinage selon l'invention aient été décrits pour un usinage particulier, à savoir le perçage, des modifications sont envisageables sans changer l'esprit de l'invention. Ainsi, il y a autant de variables d'état de l'équipement de support d'usinage qu'il y a d'équipements de support d'usinage et le retour de broche est contrôlé selon le statut ON/OFF d'une variable Etat_broche.

Selon une variante de réalisation, les moyens de commande 34,36 sont une machine-outil multiaxiale mobile comprenant un module principal, appelé contrôleur, le système 10 d'usinage selon l'invention et le ou les équipements de support d'usinage. Plus particulièrement dans cette variante, les moyens de commande 34, 36 sont dans le module principal.

Selon une variante non représentée, un système 10 d'usinage, dont l'étape S26 de l'algorithme de fonctionnement utilise la moyenne sur 16 échantillons de la dérivée première de la pression au lieu de la moyenne sur 16 échantillons de la dérivée seconde, est employé lorsque l'outil d'usinage 14 comprend un seul foret.

Bien évidemment, des électrovannes de type "inversé" peuvent être utilisées lorsque les valeurs prises par les variables état des équipements de support d'usinage sont inversées.

Selon une variante non représentée, les moyens 30 sont configurés pour mesurer une variation de la pression du fluide entre la pression d'alimentation à l'entrée 18 de l'appareil et la pression du fluide à la sortie 20 de l'appareil.

Le procédé décrit ci-dessus à partir de la mesure de la pression de sortie du fluide conserve les mêmes fonctionnalités dans cette variante.

## Revendications

1. Procédé de contrôle de l'usinage d'une pièce (P) par un appareil d'usinage automatique portatif (12), l'appareil d'usinage comprenant au moins un outil d'usinage (14) qui est configuré pour usiner la pièce sous l'action d'un fluide sous pression alimentant l'appareil et suivant un cycle d'usinage comportant plusieurs phases et au moins un équipement de support d'usinage (Y, E), ledit au moins un équipement de support d'usinage coopérant avec ledit au moins outil d'usinage lors de l'usinage de la pièce, le procédé de contrôle comprend les étapes suivantes :
- mesure de la pression du fluide en sortie de l'appareil,
- analyse de la pression mesurée pour détecter au moins une phase du cycle d'usinage de la pièce par ledit au moins un outil d'usinage à partir de la pression ainsi mesurée,
- commande dudit au moins un équipement de support d'usinage en fonction de ladite au moins une phase du cycle d'usinage détectée.

2. Procédé selon la revendication 1, **caractérisé en ce que** l'étape de commande dudit au moins un équipement de support d'usinage est effectuée en envoyant un signal à un actionneur qui agit sur ledit au moins un équipement de support d'usinage.

3. Procédé selon la revendication 1 ou 2, **caractérisé en ce qu'**il comprend, préalablement à l'étape de mesure de la pression, une étape appelée cycle à vide (S1-S14), d'initialisation d'au moins une valeur de référence d'au moins une variable représentative d'une grandeur physique intervenant lors de l'usinage de la pièce.

4. Procédé selon la revendication 3, **caractérisé en ce que** ladite au moins une variable est choisie parmi le temps et la pression.

5. Procédé selon l'une des revendications 1 à 4, **caractérisé en ce qu'**il comprend, à partir de la pression mesurée au cours du temps, une étape (S17) de détermination de la dérivée première de la pression en fonction du temps.

6. Procédé selon l'une des revendications 1 à 5, **caractérisé en ce qu'**il comprend, à partir de la pression mesurée au cours du temps, une étape (S17) de détermination de la dérivée seconde de la pression en fonction du temps.

7. Procédé selon la revendication 6, **caractérisé en ce qu'**il comprend une étape de comparaison (S26) de la dérivée seconde de la pression avec une valeur seuil prédéterminée et, en fonction du résultat de la comparaison, une étape de détection de début d'usinage qui est **caractérisée par** l'entrée de l'outil d'usinage dans la pièce.

8. Procédé selon la revendication 5 et la revendication 6 ou 7, **caractérisé en ce qu'**il comprend une étape de comparaison (S32) de la dérivée première de la pression avec une valeur seuil prédéterminée et, en fonction du résultat de la comparaison, une étape (S33) de détection de fin d'usinage qui est **caractérisée par** la sortie de l'outil d'usinage de la pièce.

9. Procédé selon l'une des revendications 3 à 8, **caractérisé en ce qu'**il comprend une étape de comparaison (S32) d'une durée d'usinage avec une valeur seuil (tmax) mesurée lors de l'étape de cycle à vide et, en fonction du résultat de la comparaison, une étape (S33) de détection de fin d'usinage qui est **caractérisée par** la sortie de l'outil d'usinage de la pièce.

10. Procédé selon la revendication 8 ou 9, **caractérisé en ce que** l'étape de détection de fin d'usinage est suivie de l'étape de commande dudit au moins un équipement support d'usinage.

11. Système de contrôle de l'usinage d'une pièce (P), système comprenant:
- un appareil d'usinage automatique (12) comprenant, au moins un outil d'usinage (14) configuré pour usiner la pièce suivant un cycle d'usinage comportant plusieurs phases, au moins un premier équipement de support d'usinage qui comprend une broche (Y) supportant ledit au moins un outil d'usinage, une unité (16) d'entrainement en mouvement de la broche, une alimentation (A) en fluide sous pression de l'appareil et une sortie de fluide dudit appareil, l'unité d'entrainement fonctionnant à partir de l'alimentation en fluide sous pression de l'appareil,
- des moyens (32) de mesure de la pression du fluide en sortie de l'appareil,
- des moyens (30) d'analyse de la pression mesurée par lesdits moyens de mesure pour détecter au moins une phase du cycle d'usinage de la pièce par ledit au moins un outil d'usinage à partir de la pression ainsi mesurée,
- des moyens de commande (34, 36) dudit au moins un équipement de support d'usinage en fonction de ladite au moins une phase du cycle d'usinage détectée.

12. Système selon la revendication précédente, **caractérisé en ce que** ledit au moins un équipement de support d'usinage comprend un réservoir de lubrification (E).

13. Système selon la revendication 11 ou 12, **caractérisé en ce que** les moyens de commande (34, 36) sont intégrés dans une machine outil multiaxiale mobile.

## Patentansprüche

1. Verfahren zur Kontrolle der Bearbeitung eines Werkstücks (P) durch eine tragbare automatische Bearbeitungsvorrichtung (12), wobei die Bearbeitungsvorrichtung mindestens ein Bearbeitungswerkzeug (14), das konfiguriert ist, um das Werkstück unter der Einwirkung eines unter Druck stehenden Fluides, das die Vorrichtung versorgt, und nach einem Bearbeitungszyklus, der mehrere Phasen aufweist, zu bearbeiten, und mindestens eine Unterstützvorrichtung für die Bearbeitung (Y, E) aufweist, wobei die mindestens eine Unterstützvorrichtung für die Bearbeitung mit dem mindestens einen Bearbeitungswerkzeug bei der Bearbeitung des Werkstücks zusammenwirkt, das Verfahren zur Kontrolle die folgenden Schritte aufweist:
- Messen des Drucks des Fluides am Ausgang der Vorrichtung,
- Analyse des gemessenen Drucks, um mindestens eine Phase des Bearbeitungszyklus des Werkstücks durch das mindestens eine Bearbeitungswerkzeug ausgehend von dem auf diese Weise gemessenen Druck zu erkennen,
- Steuern der mindestens einen Unterstützvorrichtung für die Bearbeitung in Abhängigkeit von der mindestens einen erkannten Phase des Bearbeitungszyklus.

2. Verfahren nach Anspruch 1, **dadurch gekennzeichnet, dass** der Schritt des Steuerns der mindestens einen Unterstützvorrichtung für die Bearbeitung durchgeführt wird, indem ein Signal an einen Aktuator gesendet wird, der auf die mindestens eine Unterstützvorrichtung für die Bearbeitung einwirkt.

3. Verfahren nach Anspruch 1 oder 2, **dadurch gekennzeichnet, dass** es vor dem Schritt des Messens des Drucks einen Schritt, der Leerlaufzyklus genannt wird (S1-S14), der Initialisierung von mindestens einem Referenzwert von mindestens einer Variablen, die für eine physikalische Größe repräsentativ ist, die während der Bearbeitung des Werkstücks auftritt, aufweist.

4. Verfahren nach Anspruch 3, **dadurch gekennzeichnet, dass** die mindestens eine Variable aus der Zeit und dem Druck ausgewählt wird.

5. Verfahren nach einem der Ansprüche 1 bis 4, **dadurch gekennzeichnet, dass** es ausgehend von dem Druck, der im Laufe der Zeit gemessen wird, einen Schritt (S17) des Bestimmens der ersten Ableitung des Drucks in Abhängigkeit von der Zeit aufweist.

6. Verfahren nach einem der Ansprüche 1 bis 5, **dadurch gekennzeichnet, dass** es ausgehend von dem Druck, der im Laufe der Zeit gemessen wird, einen Schritt (S17) des Bestimmens der zweiten Ableitung des Drucks in Abhängigkeit von der Zeit aufweist.

7. Verfahren nach Anspruch 6, **dadurch gekennzeichnet, dass** es einen Schritt des Vergleichens (S26) der zweiten Ableitung des Drucks mit einem vorbestimmten Schwellenwert und in Abhängigkeit von dem Ergebnis des Vergleichens einen Schritt des Erkennens des Beginns der Bearbeitung aufweist, der durch das Eintreten des Bearbeitungswerkzeugs in das Werkstück gekennzeichnet ist.

8. Verfahren nach Anspruch 5 und nach Anspruch 6 oder 7, **dadurch gekennzeichnet, dass** es einen Schritt des Vergleichens (S32) der ersten Ableitung des Drucks mit einem vorbestimmten Schwellenwert und in Abhängigkeit von dem Ergebnis des Vergleichens einen Schritt (S33) des Erkennens des Endes der Bearbeitung aufweist, der durch das Austreten des Bearbeitungswerkzeugs aus dem Werkstück gekennzeichnet ist.

9. Verfahren nach einem der Ansprüche 3 bis 8, **dadurch gekennzeichnet, dass** es einen Schritt des Vergleichens (S32) einer Bearbeitungsdauer mit einem Schwellenwert (tmax), der während des Schrittes des Leerlaufzyklus gemessen wird, und in Abhängigkeit von dem Ergebnis des Vergleichens einen Schritt (S33) des Erkennens des Endes der Bearbeitung aufweist, der durch das Austreten des Bearbeitungswerkzeugs aus dem Werkstück gekennzeichnet ist.

10. Verfahren nach Anspruch 8 oder 9, **dadurch gekennzeichnet, dass** auf den Schritt des Erkennens des Endes der Bearbeitung der Schritt des Steuerns der mindestens einen Unterstützvorrichtung für die Bearbeitung folgt.

11. System zur Kontrolle der Bearbeitung eines Werkstücks (P), wobei das System Folgendes aufweist:
- eine automatische Bearbeitungsvorrichtung (12), umfassend mindestens ein Bearbeitungswerkzeug (14), das konfiguriert ist, um das Werkstück nach einem Bearbeitungszyklus, der mehrere Phasen aufweist, zu bearbeiten, mindestens eine erste Unterstützvorrichtung für die Bearbeitung, die eine Spindel (Y), die das mindestens eine Bearbeitungswerkzeug stützt, eine Einheit (16) zum Inbewegungsetzen der Spindel, eine Versorgung (A) der Vorrichtung mit unter Druck stehendem Fluid und einen Fluidausgang aus der Vorrichtung aufweist, wobei die Einheit zum Inbewegungsetzen ausgehend von der Versorgung der Vorrichtung mit unter Druck stehendem Fluid funktioniert,
- Mittel (32) zum Messen des Drucks des Fluides am Ausgang der Vorrichtung,
- Mittel (30) zur Analyse des Drucks, der durch die Mittel zum Messen gemessen wird, um mindestens eine Phase des Bearbeitungszyklus des Werkstücks durch das mindestens eine Bearbeitungswerkzeug ausgehend von dem auf diese Weise gemessenen Druck zu erkennen,
- Mittel zum Steuern (34, 36) der mindestens einen Unterstützvorrichtung für die Bearbeitung in Abhängigkeit von der mindestens einen erkannten Phase des Bearbeitungszyklus.

12. System nach dem vorhergehenden Anspruch, **dadurch gekennzeichnet, dass** die mindestens eine Unterstützvorrichtung für die Bearbeitung einen Schmiermittelbehälter (E) aufweist.

13. System nach Anspruch 11 oder 12, **dadurch gekennzeichnet, dass** die Mittel zum Steuern (34, 36) in einer beweglichen Mehrachsenwerkzeugmaschine integriert sind.

## Claims

1. Method for controlling the machining of a part (P) by a portable automatic machining apparatus (12), the machining apparatus comprising at least one machining tool (14) which is configured to machine the part under the action of a pressurized fluid feeding the apparatus and following a machining cycle comprising a number of phases and at least one machining support equipment item (Y, E), said at least one machining support equipment item cooperating with said at least one machining tool during the machining of the part, the control method comprises the following steps:
- measuring the pressure of the fluid at the outlet of the apparatus,
- analyzing the measured pressure to detect at least one phase of the cycle of machining of the part by said at least one machining tool from the duly measured pressure,
- controlling said at least one machining support equipment item as a function of said at least one detected machining cycle phase.

2. Method according to Claim 1, **characterized in that** the step of controlling said at least one machining support equipment item is performed by sending a signal to an actuator which acts on said at least one machining support equipment item.

3. Method according to Claim 1 or 2, **characterized in that** it comprises, prior to the pressure measurement step, a step called no-load cycle (S1-S14), of initialization of at least one reference value of at least one variable representative of a physical quantity involved in the machining of the part.

4. Method according to Claim 3, **characterized in that** said at least one variable is chosen from the time and the pressure.

5. Method according to one of Claims 1 to 4, **characterized in that** it comprises, from the pressure measured over time, a step (S17) of determining the first derivative of the pressure as a function of the time.

6. Method according to one of Claims 1 to 5, **characterized in that** it comprises, from the pressure measured over time, a step (S17) of determining the second derivative of the pressure as a function of the time.

7. Method according to Claim 6, **characterized in that** it comprises a step of comparing (S26) the second derivative of the pressure with a predetermined threshold value and, as a function of the result of the comparison, a step of detecting the start of machining which is **characterized by** the entry of the machining tool into the part.

8. Method according to Claim 5 and Claim 6 or 7, **characterized in that** it comprises a step of comparing (S32) the first derivative of the pressure with a predetermined threshold value and, as a function of the result of the comparison, a step (S33) of detecting the end of machining which is **characterized by** the exiting of the machining tool from the part.

9. Method according to one of Claims 3 to 8, **characterized in that** it comprises a step of comparing (S32) a machining duration with a threshold value (tmax) measured during the no-load cycle step and, as a function of the result of the comparison, a step (S33) of detecting the end of machining which is **characterized by** the exiting of the machining tool from the part.

10. Method according to Claim 8 or 9, **characterized in that** the step of detecting the end of machining is followed by the step of controlling said at least one machining support equipment item.

11. System for controlling the machining of a part (P), said system comprising:
- an automatic machining apparatus (12) comprising at least one machining tool (14) configured to machine the part following a machining cycle comprising a number of phases, at least one first machining support equipment item which comprises a spindle (Y) supporting said at least one machining tool, a unit (16) for driving the movement of the spindle, a pressurized fluid feed (A) for the apparatus and an output of fluid from said apparatus, the driving unit operating from the pressurized fluid feed of the apparatus,
- means (32) for measuring the pressure of the fluid at the outlet of the apparatus,
- means (30) for analyzing the pressure measured by said measurement means to detect at least one phase of the cycle of machining of the part by said at least one machining tool from the duly measured pressure,
- means (34, 36) for controlling said at least one machining support equipment item as a function of said at least one detected machining cycle phase.

12. System according to the preceding claim, **characterized in that** said at least one machining support equipment item comprises a lubrication tank (E).

13. System according to Claim 11 or 12, **characterized in that** the control means (34, 36) are incorporated in a mobile multi-axial machine tool.
